# EUROPÄISCHE PATENTANMELDUNG

(11) **EP 4 708 108 A1**
(43) Veröffentlichungstag der Anmeldung: **11.03.2026**
(21) Anmeldenummer: 25197401.0
(22) Anmeldetag: 21.08.2025
(51) Int. Cl.: G06F 30/15, B64F 5/60, G06F 119/10

(54) **VERFAHREN ZUR OPTIMIERUNG DES TECHNISCHEN DESIGNS UND BETRIEBS EINES FLUGZEUGES/FAHRZEUGES IM HINBLICK AUF ZIELPARAMETER DER GERÄUSCHENTWICKLUNG**

(30) Priorität: 06.09.2024 DE 102024125650
(71) Anmelder: Deutsches Zentrum für Luft- und Raumfahrt e.V., 53227 Bonn (DE)
(72) Erfinder: Schade, Stephen, 53227 Bonn (DE); Bartels, Susanne, 53227 Bonn (DE); Thiel, Christian, 53227 Bonn (DE); Straub, David, 53227 Bonn (DE); Schonert, Eric, 53227 Bonn (DE); Jaron, Robert, 53227 Bonn (DE)
(74) Vertreter: Beyer, Andreas

(57) **Zusammenfassung**

Verfahren zur Konstruktion, zur Optimierung des technischen Designs und/oder zum Betrieb einer Maschine, eines Flugzeugs oder Fahrzeugs aufweisend
- Eingeben (S1) von Parameterwerten der Maschine, des Flugzeugs oder Fahrzeugs durch zumindest eine Testperson auf einem Endgerät, wobei die Parameterwerte Konstruktions-Parameterwerte, technische Design-Parameterwerte und/oder Betriebs-Parameterwerte der Maschine, des Flugzeugs oder Fahrzeugs sind,
- Wiedergabe von Audiosignalen (S2) auf dem Endgerät, welche das Geräusch der Maschine, des Flugzeugs oder Fahrzeugs auf Basis der eingegebenen Parameterwerte wiedergeben,
- Bewerten eines Höreindrucks (S3) der Audiosignale durch die Testperson und Erhalten eines subjektiven Bewertungsergebnisses der Testperson,
- Eingeben (S4) des subjektiven Bewertungsergebnisses durch die Testperson auf dem Endgerät,
- Ermitteln (S5) eines Zusammenhangs der Parameterwerte, oder von Sätzen der Parameterwerten, mit dem subjektiven Bewertungsergebnis,
- Konstruieren (S6), Optimieren des technischen Designs und/oder Betreiben der Maschine, des Flugzeugs oder Fahrzeugs unter Einbeziehung des Zusammenhangs der Parameterwerte, oder der Sätze der Parameterwerte, mit dem subjektiven Bewertungsergebnis, wobei bei dem Konstruieren, dem Optimieren des technischen Designs und/oder dem Betreiben Parameterwerte verwendet werden, die im Betrieb der Maschine, des Flugzeugs oder des Fahrzeugs zu Geräuschen der Maschine, des Flugzeugs oder Fahrzeugs führen, die mit einem subjektiven Bewertungsergebnis, das einem vorgegebenen Bewertungsergebnis entspricht, vorzugsweise einem positiven Bewertungsergebnis, korrelieren.

## Beschreibung

Die vorliegende Erfindung betrifft ein Verfahren zur Konstruktion, zur Optimierung des technischen Designs und/oder zum Betrieb eines Flugzeugs oder Fahrzeugs. Das Verfahren dient insbesondere der Konstruktion, der Optimierung des technischen Designs und/oder des Betriebs eines Flugzeuges/Fahrzeuges im Hinblick auf Zielparameter der Geräuschentwicklung und -modifikation sowie der Geräuschwahrnehmung.

Zur Vorhersage und Bewertung von Triebwerksschall werden gewöhnlich analytische und numerische Methoden und experimentelle Verfahren genutzt. Die schnellen analytischen Methoden werden im Vorentwurf eingesetzt und sollen helfen, den Raum relevanter Auslegungsparameter zu erkunden, um denjenigen Bereich abzugrenzen, der unter Betrachtung bestimmter akustischer Parameter (z.B. Schalldruckpegel) am günstigsten erscheint. Auf der Basis dieser Ergebnisse können virtuelle Überflüge durchgeführt werden. Mit akustischen Überflugsimulationen werden einzelne Flugabschnitte virtuell akustisch simuliert. Dabei wird der Schall von der Schallquelle am Flugzeug zu definierten Positionen am Boden durch die Atmosphäre ausgebreitet. Die Schallpegel am Boden können anschließend in Zeitreihen überführt werden und als Audiodateien gespeichert werden. Diese Ergebnisse werden u.a. genutzt, um Input für psychoakustische Studien, wie beispielsweise Hörversuche zu liefern. Bekannte Werkzeuge für die beschriebene Prozesskette bestehend aus (1) Berechnung der Schallquelle, (2) Durchführen der Überflugsimulationen und (3) Hörbarmachung der Geräusche ist beispielsweise PropNoise, beschrieben in doi:10.14279/depositonce-5935, doi:10.14279/depositonce-7057, VIOLIN, CORAL. Weitere Literatur hierzu ist zu finden bei A. Moreau, A. Prescher, S. Schade, M. Dang, R. Jaron, S. Guérin, A framework to simulate and to auralize the sound emitted by aircraft engines, InterNoise conference 2023 conference proceedings (2023).

Bislang erfolgte die Bewertung psychoakustischer Eigenschaften und der Geräuschqualität von konventionellen Flugzeugen wie auch moderner Flugsysteme, wie z.B. Drohnen, vor allem durch physikalische oder psychoakustische Kennzahlen (für einen Überblick, s. z.B. Lotinga, Ramos-Ramero, Green & Torija, 2023, https://doi.org/10.1007/s40726-023-00285-4). Einige Studien stellten darüber hinaus den originären Aufzeichnungen von Fluggeräuschen und/oder synthetisch veränderten Geräuschaufzeichnungen die Bewertungen von Hörenden (z.B. im Hinblick auf Belästigung oder Unangenehmheit) aus Hörversuchen gegenüber (z.B. Janssens, Vecchio & Van der Auweraer, 2008, https://doi.org/10.1016/j.ast.2007.10.002; Gwak, Han & Lee, 2020, https://doi.org/10.1016/j.jsv.2020.115651, Christian & Cabell, 2017, DOI:10.2514/6.2017-4051). Im Bereich konventioneller Fluggeräusche wurde in einzelnen Studien darüber hinaus die Geräuschqualität ("Sound Quality") untersucht, d.h. die wahrgenommene Hörempfindung, ausgedrückt anhand verschiedener Attribute und Adjektive (z. B. Schütte, Müller, Sandrock, Griefahn, Lavandier & Barbot, 2009, https://doi.org/10.1016/j.apacoust.2009.01.004. Angaben zur Geräuschqualität erlauben es, noch weitere Anhaltspunkte für störende, unangenehme oder belästigende Geräuschkomponenten zu identifizieren und zu quantifizieren. Zur Erforschung der Geräuschqualität werden Semantische Differenziale eingesetzt, die aus mehreren unipolare und/oder bipolaren Adjektivpaaren bestehen. Semantische Differenziale werden i.d.R. spezifisch für eine bestimmte Lärmquelle entwickelt und eingesetzt. So entwickelten Feldmann, Carolus & Schneider, 2017, Proceedings of ASME Turbo Expo 2017, Turbomachinery Technical Conference and Exposition, GT2017, June 26-30, 2017, Charlotte, NC, USA) ein Semantisches Differenzial zur Beschreibung der Geräuschqualität für Ventilatoren und Schäffer, Pieren, Brink & Schlittmeier, 2023, https://doi.org/10.1016/j.apacoust.2023.109493, für entsprechendes Instrument für die Bewertung von Windturbinengeräuschen. Für konventionellen Fluglärm existiert ein Semantisches Differenzial von Schütte, Müller, Sandrock, Griefahn, Lavandier & Barbot, 2009, https://doi.org/10.1016/j.apacoust.2009.01.004. Allerdings existierte bislang kein Semantisches Differenzial, das die spezifischen Geräuschmerkmale für elektrisch angetrieben Flugzeuge und/oder Air Taxis abdeckt. Darüber hinaus erfolgte der Einsatz von Semantischen Differenzialen bislang allesamt mit einer begrenzten Anzahl an Versuchsteilnehmenden und wie oben beschrieben anhand von Geräuschen bereits existierender Fluggeräte oder synthetischen Veränderungen hiervon.

Daher kann aktuell eine Bewertung erst dann erfolgen, wenn mindestens ein Prototyp vorliegt und eine Feld- bzw. Laborstudie durchgeführt werden kann. Diese Bewertungen erfolgen als kosten- und zeitintensive Einzelstudien, beispielsweise in einer Laborumgebung mit eigens akquirierten Teilnehmenden. Dabei können nur geringe Stichprobengrößen getestet werden, wodurch eine systematische Testung möglichst aller Änderungen der Designparameter bisher nicht möglich ist. Darüber hinaus ist die Herstellung von Prototypen von Luftfahrzeugen enorm kostspielig, insbesondere bei einer hohen Zahl an möglichen Iterationen. Aus diesen Gründen ist die Anzahl der möglichen Designvariationen häufig beschränkt und es kommt zu suboptimalen Lösungen.

Ein weiteres technisches Problem ist, dass Flugzeuge problematische psychoakustische Eigenschaften aufweisen, die durch rein physikalische Parameter, wie z.B. den Maximalpegel oder erweiterte Metriken (z.B. EPNL) nicht erfasst werden können.

Aufgabe der Erfindung war es, für diese Probleme eine Lösung anzugeben.

Angegeben wird ein Verfahren nach Anspruch 1. Spezielle Ausführungsformen sind in Unteransprüchen und dieser Beschreibung angegeben.

Angegeben wird ein Verfahren zur Konstruktion, zur Optimierung des technischen Designs und/oder zum Betrieb einer Maschine, eines Flugzeugs oder Fahrzeugs aufweisend
- Eingeben von Parameterwerten der Maschine, des Flugzeugs oder Fahrzeugs durch zumindest eine Testperson, vorzugsweise einer Vielzahl Testpersonen, auf einem Endgerät, bei einer Vielzahl Testpersonen vorzugsweise jeweils auf einem der Testperson zugeordneten Endgerät, wobei die Parameterwerte Konstruktions-Parameterwerte, technische Design-Parameterwerte und/oder Betriebs-Parameterwerte der Maschine, des Flugzeugs oder Fahrzeugs sind,
- Wiedergabe von Audiosignalen auf dem Endgerät, bei einer Vielzahl Testpersonen vorzugsweise jeweils auf einem der Testperson zugeordneten Endgerät, welche das Geräusch der Maschine, des Flugzeugs oder Fahrzeugs auf Basis der eingegebenen Parameterwerte wiedergeben,
- Bewerten eines Höreindrucks der Audiosignale durch die Testperson, vorzugsweise eine Vielzahl Testpersonen, und Erhalten eines subjektiven Bewertungsergebnisses der Testperson/Testpersonen,
- Eingeben des subjektiven, vorzugsweise qualitativen Bewertungsergebnisses durch die Testperson oder jede der Testpersonen, mittels des Endgeräts, bei einer Vielzahl Testpersonen vorzugsweise jeweils auf dem der Testperson zugeordneten Endgerät,
- Ermitteln eines Zusammenhangs der Parameterwerte, oder von Sätzen der Parameterwerten, mit dem subjektiven Bewertungsergebnis oder den subjektiven Bewertungsergebnissen,
- Konstruieren, Optimieren des technischen Designs und/oder Betreiben der Maschine, des Flugzeugs oder Fahrzeugs unter Einbeziehung des Zusammenhangs der Parameterwerte, oder der Sätze der Parameterwerte, mit dem subjektiven Bewertungsergebnis oder den subjektiven Bewertungsergebnissen (bei einer Vielzahl Testpersonen), wobei bei dem Konstruieren, dem Optimieren des technischen Designs und/oder dem Betreiben Parameterwerte verwendet werden, die im Betrieb der Maschine, des Flugzeugs oder Fahrzeugs zu Geräuschen des Flugzeugs oder Fahrzeugs führen, die mit einem subjektiven Bewertungsergebnis, das einem vorgegebenen Bewertungsergebnis entspricht, vorzugsweise einem positiven Bewertungsergebnis, korrelieren.

Von der Erfindung werden in ihrer allgemeinsten Form oder in einer ihrer nachfolgend noch beschriebenen speziellen Ausführungsformen einer oder mehrere der nachfolgend genannten Vorteile erzielt:
- Das Verfahren erlaubt eine multiple Regressionsanalyse, um den Zusammenhang zwischen Geräuschbewertungen sowie abgeleiteten psychoakustischen Parametern mit den Designparametern des Antriebs herzustellen
- Das Verfahren erlaubt die Identifikation der wichtigsten Prädiktoren der Geräuschbewertung und - bei einer Vielzahl Testpersonen - Erhebung der Varianz, die durch die getesteten Prädiktoren aufgeklärt werden kann.
- Die akustische Entwicklung neuer Maschinen, Flugzeuge oder Fahrzeuge kann aus psychoakustischer Sicht verbessert werden. Insbesondere können psychoakustische Eigenschaften in das akustische Design neuer, d.h. noch nicht realisierter, Konfigurationen von Flugzeugen oder Fahrzeugen einfließen. Darüber hinaus können Bewertungen aus großangelegten Hörversuchen in die Entwicklung neuer Flugzeug- oder Fahrzeugkonstruktionen einfließen.
- die Kopplung aus der Auralisierung (Hörbarmachung) von Maschinen-, Flugzeug- oder Fahrzeuggeräuschen basierend auf einer spezifischen Konfiguration, die Bewertung durch psychoakustische Kennzahlen und Beurteilungen aus Hörversuchen auf breiter Basis und die Ableitung von aktiven Schallschutzmaßnahmen an der Maschine dem Flugzeug oder dem Fahrzeug, insbesondere im Hinblick auf die Reduzierung von Belästigung und Störungsempfinden, Vermindern von Schlafstörungen bei nächtlichem Betrieb und somit der Erhalt der Gesundheit und des Wohlbefindens der Lärmbetroffenen.
- die Kopplung aus der Auralisierung von verschiedenen Bewegungsrouten mit der Bewertung durch psychoakustische Kennzahlen und Beurteilungen aus Hörversuchen auf breiter Basis mit dem Ziel der Ableitung geräuschoptimierter Bewegungsrouten, beispielsweise Flugrouten, sowie der Reduktion des Lärms durch die Anpassung von Parametern während der Bewegung (insbesondere im urbanen Bereich).
- Die Erfindung ist besonders für Flugzeughersteller interessant. In der Entwicklungsphase von Flugzeugen erlaubt sie die fortlaufende, schnelle und kostengünstige Erfassung der Auswirkungen von Konstruktions-Entscheidungen.
- Gezielte Steuerung eines Antriebs während einer Bewegung, beispielsweise eines Überfluges, zur Erreichung eines gewünschten, möglichst angenehmen und wenig belästigenden Höreindrucks (insbesondere bei Start und Landung eines Flugzeuges und folglich niedriger Flughöhen), zum Beispiel durch Reduktion als schrill und scharf empfundene Geräuschkomponenten durch dumpfere oder rauschendere Komponenten.
- Vielfältige Hörversuche können Testpersonen in ihrem heimischen Umfeld einbinden und nicht auf das Labor beschränkt sein. Die Umsetzung kann mittels Nutzung eines mobilen Endgeräts erfolgen. Kontextfaktoren dieser heimischen Umgebung können durch Sensoren des Endgeräts erfasst und bei der Beurteilung der zu bewertende Geräusche als zusätzliche Einflussfaktoren statistisch berücksichtigt werden.
- Geräuschoptimierte Konstruktion von Antrieben, nicht allein im Hinblick auf Schalldruckpegelminimierung, sondern auch in Bezug auf eine als angenehm empfundene Geräuschqualität von Über- und Vorbeifluggeräuschen oder Vorbeifahrgeräuschen zum Beispiel ausgedrückt anhand von konkreten Adjektivpaaren (insbesondere durch Semantisches Differenzial)
- Entwicklung neuer mathematischer Modelle für die akustische Zertifizierung neuer Flugzeug- und Fahrzeugkonzepte.
- Bildung einer Rangreihe der Antriebskonfigurationen im Hinblick auf die durch sie ausgelöste Hörempfindung als angenehm/unangenehm oder belästigend
- Einordnung von Geräuschen in ein homogenes Referenzsystem und Vergleiche anhand semantischer Beschreibungsmerkmale (im Sinne von Schütte, Müller, Sandrock, Griefahn, Lavandier & Barbot, 2009, https://doi.org/10.1016/j.apacoust.2009.01.004)
- Damit bei neuen Maschinen-, Flugzeug- oder Fahrzeugkonzepten unangenehme und belästigende Geräusche vermieden werden können, stellt die Erfindung eine neue und schnelle Methode bereit, mit der der Schall zukünftiger Konstruktionen hörbar gemacht und psychoakustisch bewertet werden können. Insbesondere können Auslegungsregeln für eine geräuscharme Konstruktion neuartiger Antriebe erforscht und entwickelt werden.
- Es kann eine große Zahl an Personen frühzeitig und aktiv in den Entwicklungsprozess von Maschinen, Flugzeugen oder Fahrzeugen einbezogen werden. Hierdurch kann eine Datenbasis etabliert werden, aus der analysiert werden kann, welche Konstruktionsparameter, oder technische Designparameter bei Flugzeugen, zu angenehmen, subjektiven Schallwahrnehmungen führen und beispielsweise im Fall eines Flugzeugs langfristig die Belästigung der von Überflügen betroffenen Anwohnenden reduzieren. Dadurch kann eine Kopplung zwischen Konstruktions-Parametern und psychoakustischen Parametern erzielt werden. Gleichzeitig kann die Erfindung aber auch die Identifikation und die Akzeptanz mit dem Innovationsprodukt steigern im Sinne des Acceptance-bydesign-Ansatzes. Die Erfindung ermöglich es den Nutzenden, Konfigurationen basierend auf Konstruktions-Parametern anzupassen und den Höreindruck unmittelbar zu bewerten. Bei dieser Bewertung von, beispielsweise von Flugzeugantrieben, im Hinblick auf ihren akustischen Höreindruck können derzeit noch unbekannte Konzepte, beispielsweise für Antriebssysteme (= unbekannte Geräusche) bewertet werden.
- die Erfindung ermöglicht eine Verknüpfung zwischen (a) Konstruktions-Parametern, (b) Geräuschen, (c) Schallwahrnehmung und Bewertung durch Testpersonen und (d) psychoakustischen Parametern wie Rauigkeit, Schärfe, Schwankungsstärke, Tonalität, etc. her. Diese Verknüpfung erlaubt ebenfalls die Rückkopplung ausgehend von den psychoakustischen Parametern zurück zu den Konstruktionsparametern.

Die Erfindung ist anwendbar auf Maschinen, Flugzeuge und Fahrzeuge. Das Fahrzeug kann ein Fahrzeug des Schienen- oder Straßenverkehrs sein, insbesondere ein Kraftfahrzeug oder Schienenfahrzeug.

Bei einer Vielzahl Testpersonen werden vorzugsweise quantitative, varianzanalytische statistische Auswerteverfahren eingesetzt, um den Zusammenhang der Parameterwerte, oder von Sätzen der Parameterwerten, mit den subjektiven Bewertungsergebnissen zu erhalten. Die subjektiven Verwertungsergebnisse weisen eine Streuung auf, die ermittelt werden kann. Beispielweise kann bei einer Vielzahl Testpersonen ein maximaler Wert einer Standardabweichung definiert werden, um ein bestimmtes subjektives Bewertungsergebnis eindeutig zuzuordnen.

Parameterwerte können in einer Ausführungsform ausgewählt sein aus Konstruktions-Parameterwerten, technischen Designparameterwerten und/oder Betriebs-Parameterwerten.

Das Geräusch des Flugzeugs oder Fahrzeugs kann ein Geräusch sein, wie es sich im Inneren des Flugzeugs oder Fahrzeugs einer Person darstellt oder wie es sich außerhalb des Flugzeugs oder Fahrzeugs einer Person darstellt.

Das Endgerät kann ein mobiles Endgerät sein, wie beispielsweise ein Smartphone.

Das Endgerät weist vorzugsweise eine Software auf, mit welcher zumindest die Verfahrensmaßnahmen:
- Eingeben von Parameterwerten
- Wiedergabe von Audiosignalen auf dem Endgerät,
- Bewerten eines Höreindrucks der Audiosignale durch die Testperson
- Speichern des Bewertungsergebnisses oder Übermitteln des Bewertungsergebnisses an einen externen Speicher,
durchgeführt werden können.

Audiosignale, welche das Geräusch der Maschine, des Flugzeugs oder Fahrzeugs auf Basis der eingegebenen Parameterwerte wiedergeben, können aus einem externen Speicher, der nicht der Speicher des Endgeräts ist, abgerufen werden. Die Audiosignale können entweder auf Basis der eingegebenen Parameterwerte erzeugt werden oder bereits auf Basis identischer oder ähnlicher Parameterwerte zuvor erzeugt worden und in einem externen Speicher bereitgestellt sein.

Bei oder nach dem Eingeben des subjektiven Bewertungsergebnisses durch die Testperson kann das Bewertungsergebnis und vorzugsweise auch die zugeordneten Audiosignale auf dem Endgerät gespeichert werden. Alternativ oder zusätzlich ist es möglich, dass das Bewertungsergebnis an einen externen Speicher übermittelt wird, wo es vorzugsweise dem Audiosignal, das als Grundlage der Bewertung, diente, zugordnet wird.

Audiosignale, welche das Geräusch der Maschine, des Flugzeugs oder Fahrzeugs auf Basis der eingegebenen Parameterwerte wiedergeben, können wie folgt erhalten werden oder erhalten worden sein:
a. Berechnung des Geräuschemission zumindest einer Schallquelle der Maschine, des Flugzeugs oder des Fahrzeugs auf Basis von Konstruktions- oder Betriebs-Parameterwerten
b. Simulation der Geräuschimmission, vorzugsweise virtuelle Simulation
c. Auralisierung und vorzugsweise Erzeugen einer Audiodatei.

Die Schritte a., b. c. werden nachfolgend auch als analytische Prozesskette bezeichnet.

Ein bekanntes Werkzeug für die beschriebene analytische Prozesskette ist beispielsweise PropNoise, beschrieben in doi:10.14279/depositonce-5935, doi:10.14279/depositonce-7057, VIOLIN. Weitere Literatur hierzu ist zu finden bei A. Moreau, A. Prescher, S. Schade, M. Dang, R. Jaron, S. Guérin, A framework to simulate and to auralize the sound emitted by aircraft engines, InterNoise conference 2023 conference proceedings (2023).

Zur virtuellen Simulation der Geräuschimmission können als weitere Betriebsparameter die Route eines Fahrzeugs oder Flugzeugs mit zugrunde gelegt werden, wie eine Flugroute eines Flugzeugs. Diese Betriebsparameter sind neben Betriebsparameter einer Schallquelle ebenfalls relevant für den Höreindruck.

Die oben angegebene analytische Prozesskette wird vorzugsweise für eine Vielzahl Parameterkonfigurationen im angewendet.

Die erzeugten Audiodateien werden vorzugsweise einmalig in einer Audio-Datenbank abgelegt. Jede Kombination aus Konstruktions- oder Betriebsparametern ist dann mit einer Audiodatei verknüpft, welche auf dem Endgerät wieder gegeben werden kann.

Bei dem Eingeben von Parameterwerten kann die Testperson eine Maschine, ein Flugzeug oder ein Fahrzeug auf Basis der Parameterwerte konfigurieren. Beispielsweise kann die Testperson ein Antriebssystem konfigurieren. Bei der Wiedergabe von Audiosignalen auf dem Endgerät kann die verknüpfte Audio-Datei wiedergegeben werden, wobei sie vorzugsweise aus Audio-Datenbank abgerufen wird. Die Audiodatei kann eine berechnete Geräuschemission wieder geben. Anschließend kann durch die Testperson der Höreindruck bewertet werden.

Das Ermitteln eines Zusammenhangs der Parameterwerte, oder von Sätzen der Parameterwerten, mit dem subjektiven Bewertungsergebnis kann aufweisen:
Die Generierung mehrerer Datensätze, wobei jeder Datensatz das Folgende miteinander verknüpft enthält:
- Konstruktions-Parameterwerte und/oder Betriebs-Parameterwerte
- Audiodatei, welche die Audiosignale enthält, welche sich aus der gewählten Konstruktion und/oder dem gewählten Betrieb ergeben
- Subjektives Bewertungsergebnis der Audiosignale der Audiodatei.

Das subjektive Bewertungsergebnis kann basiert sein auf einem oder mehreren der Folgenden:
- globale Beschreibungsmerkmale wie z.B. "belästigend", "unangenehm". Das subjektive Bewertungsergebnis enthält dann vorzugsweise, wie störend/unangenehm oder angenehm das erzeugte Audiosignal empfunden wird.
- spezifische Beschreibungsmerkmale wie z.B. "scharf", "dumpf"
- Semantisches Differenzial, das vorzugsweise eine Bewertung entlang mehrerer unipolarer und/oder bipolarer Bewertungsdimensionen beinhaltet, die vorzugsweise mit Adjektivpaaren zur Bewertung spezifiziert sind.

Ein vorgegebenes Bewertungsergebnis kann nach Zielvorgabe definiert sein. Ein vorgegebenes Bewertungsergebnis ist vorzugsweise ein Bewertungsergebnis, das für den Betrieb der Maschine, des Flugzeugs oder Fahrzeugs erwünscht ist. Bevorzugt ist ein positives Bewertungsergebnis nach einer gewählten Bewertungsskala.

Bei dem Betreiben der Maschine, des Flugzeugs oder Fahrzeugs können Parameterwerte derart verwendet werden, dass diese Parameterwerte als Vorgabe für ein Steuerungselement dienen, welches die Betriebsparameter der Maschine, des Flugzeuges oder des Fahrzeuges während des Betriebes so anpasst, dass die als negativ empfundene Beeinträchtigungen, insbesondere psychoakustische Auswirkungen, minimiert werden.

Bei dem Ermitteln eines Zusammenhangs der Parameterwerte, oder von Sätzen der Parameterwerten, mit dem subjektiven Bewertungsergebnis kann ein Zusammenhang zwischen den Parameterwerte und den positiv / negativ bewerteten Geräuschen hergestellt werden. Dies ermöglicht eine Rückverfolgung, welche Parameter mit positiv oder negativ bewerteten Geräuschen verknüpft sind. Ferner kann analysiert werden, welche Parameter eine Korrelation zu positiv oder negativ bewerteten Geräuschen aufweisen. Es kann ein Zusammenhang zwischen positiv / negativ bewerteten Geräuschen und Parametern erhalten werden, sodass die Parameter nicht nur mit den Audiodateien verknüpft sind, sondern auch mit den subjektiven Geräuschbewertungen. Auf Basis dieser Informationen erfolgt das Konstruieren und/oder Betreiben der Maschine, des Flugzeugs oder Fahrzeugs. Die Erfindung ermöglicht somit den Erhalt von Auslegungsrichtlinien sowie konkreter Konstruktionen für zukünftige Flugzeugantriebe, welche zu einem möglichst wenig störenden Geräusch führen

Ein beispielhafter Betrieb eines Flugzeuges ist eine veränderte Flughöhe insbesondere nachts und über Gebieten mit hoher Bevölkerungsdichte. Andererseits können aber unter Bedingungen geringerer Bevölkerungsexposition andere Parameter, wie Schub und Effizienz, maximiert werden.

Beispiele für Konstruktionsparameter im Fall eines Flugzeugs sind, ohne Beschränkung: die Art der Propulsoren (Propeller oder ummantelte Fans), deren Anzahl, ihre Position auf oder unter der Tragfläche, die Blattzahl des Propellers, bei einem Fan die Anzahl der Rotor- und Statorschaufeln oder der Fandurchmesser.

Der Begriff "Konstruktion" kann sich vorzugsweise auf eine Neuentwicklung eines Flugzeugs oder Fahrzeugs beziehen, während der Begriff "Optimierung des technischen Designs" sich vorzugsweise auf ein bestehendes Flugzeug oder Fahrzeug beziehen kann. In analoger Weise können die Begriffe "Konstruktionsparameter" und "technische Designparameter" sinngemäß voneinander unterschieden sein. Es ist möglich, dass "Konstruktionsparameter" und "technische Designparameter" deckungsgleich sind. Der Begriff "technisches Design" bedeutet vorzugsweise ein Design, oder eine Gestaltung, das/die eine Auswirkung auf technische Eigenschaften hat.

Beispiele für technische Design-Parameterwerte sind, ohne Beschränkung: die Art der Propulsoren (Propeller oder ummantelte Fans), deren Anzahl, ihre Position auf oder unter der Tragfläche, die Blattzahl des Propellers, bei einem Fan die Anzahl der Rotor- und Statorschaufeln oder der Fandurchmesser.

Beispiele für Betriebsparameter eines Flugzeugs, insbesondere der Propulsoren, sind die Rotationsgeschwindigkeit - die sich auch zwischen einzelnen Propulsoren unterscheiden kann - oder der Massenstrom.

Weitere Beispiele für Betriebsparameter am Beispiel eines Flugzeugs sind Starttrajektorien, Landetrajektorien, Überflugtrajektorien, Flughöhen.

In einer Ausführungsform des Verfahrens sind die Parameterwerte Parameterwerte eines Antriebs der Maschine, des Flugzeugs oder Fahrzeugs, und die Parameterwerte sind Konstruktions-Parameterwerte, technische Design-Parameterwerte und/oder Betriebs-Parameterwerte des Antriebs, und die Audiosignale auf dem Endgerät geben das Geräusch des Antriebs auf Basis der eingegebenen Parameterwerte des Antriebs wieder, und das Konstruieren, Optimieren des technischen Designs und/oder Betreiben ist das Konstruieren, Optimieren des technischen Designs und/oder Betreiben des Antriebs, und bei dem Konstruieren, Optimieren des technischen Designs und/oder Betreiben werden Parameterwerte verwendet, die im Betrieb des Antriebs zu Geräuschen des Antriebs führen, die mit einem subjektiven Bewertungsergebnis, das einem vorgegebenen Bewertungsergebnis entspricht, vorzugsweise einem positiven Bewertungsergebnis, korrelieren.

In einer Ausführungsform des Verfahrens weist das Verfahren auf:
- Messen von Umgebungsgeräuschen mit dem Endgerät während der Wiedergabe der Audiosignale und/oder während des Bewertens des Höreindrucks der Audiosignale
- Analysieren der Umgebungsgeräusche hinsichtlich Art und/oder physikalischer Kennzeichen,
- Ermitteln eines Bezugs des subjektiven Bewertungsergebnisses zu der Art und/oder den physikalischen Kennzeichen der Umgebungsgeräusche.

In dieser Ausführungsform wird die Sensorik des Endgerätes genutzt, beispielsweise ein an dem Endgerät vorhandenes Mikrofon, um den Nutzungskontext als Datenquelle zu eröffnen.

Physikalische Kennzeichen der Umgebungsgeräusche sind zum Beispiel Lautstärke oder Frequenzspektrum.

Diese Ausführungsform liefert einen zusätzlichen Vorteil gegenüber herkömmlichen Fragebogenmethoden: In herkömmlichen Fragebogenmethoden sind Eingaben von Nutzenden häufig nicht ausreichend kontextualisiert. Aus der fehlenden Kontextualisierung können in der Datenverarbeitung mit Methoden des maschinellen Lernens Fehlklassifikationen entstehen. Um fehlende Kontextualisierungen zu vermeiden, bietet diese Ausführungsform folgende technische Lösung: Die Sensorik des Endgeräts wird genutzt, um den Nutzungskontext zu erfassen. Dafür werden Umgebungsgeräusche während der Nutzung aufgenommen. Es hat sich gezeigt, dass die Bewertung eines Höreindrucks der Audiosignale, welche das Geräusch der Maschine, des Flugzeugs oder Fahrzeugs auf Basis der eingegebenen Parameterwerte wiedergeben, auch von den Umgebungsgeräuschen abhängt. So wird beispielsweise ein Überfluggeräusch eines Flugzeuges in einer ansonsten stillen Umgebung, z.B. in stiller Natur, als störender/negativer empfunden als in einer lauten Umgebung, zum Beispiel einer städtischen Umgebung, die sowieso schon Verkehrsgeräusche aufweist.

In dieser Ausführungsform kann/können Art und/oder physikalische Kennzeichen der Umgebungsgeräusche herangezogen werden, um das subjektive Bewertungsergebnis, das bei diesem dieser Art und/oder diesen physikalischen Kennzeichen der Umgebungsgeräusche erhalten wurde, für den weiteren Verfahrensablauf zu modifizieren. Es kann ein Zusammenhang der Parameterwerte, oder der Sätze der Parameterwerte, mit dem modifizierten subjektiven Bewertungsergebnis erhalten werden. Die Modifizierung kann eine Gewichtung sein.

Das Ermitteln eines Bezugs des subjektiven Bewertungsergebnisses zu der Art und/oder den physikalischen Kennzeichen der Umgebungsgeräusche ist in einer bevorzugten Ausführungsform eine Gewichtung des subjektiven Bewertungsergebnisses mit der Art und/oder den physikalischen Kennzeichen der Umgebungsgeräusche. An vorigem Beispiel eines Flugzeugs in der Umgebung "stille Natur" oder "städtische Umgebung" lässt sich dies wie folgt erläutern: Dasselbe Überfluggeräusch wird in stiller Natur störender empfunden als in städtischer Umgebung. Obwohl die wiedergegebenen Audiosignale auf dem Endgerät, welche das Geräusch der Maschine, des Flugzeugs oder Fahrzeugs auf Basis der eingegebenen Parameterwerte wiedergeben, dieselben sind, weicht daher die subjektiven Bewertungsergebnisse ja nach Umgebungsgeräusch ab. Durch eine Gewichtung des subjektiven Bewertungsergebnisses kann daher diese Abweichung verringert oder nivelliert werden. Die Vorgabe für das Konstruieren oder Betreiben eines Flugzeugs kann derart sein, bei dem Betreiben Parameterwerte verwendet werden, die zu Geräuschen des Flugzeugs oder Fahrzeugs führen, die mit einem positiven Bewertungsergebnis in städtischer Umgebung korrelieren. In diesem Fall kann das Bewertungsergebnis in stiller Natur, also mit wenig bis keinen Umgebungsgeräuschen, geringer gewichtet werden. Alternativ ist der umgekehrte Fall denkbar.

Das Ermitteln eines Bezugs des subjektiven Bewertungsergebnisses zu der Art und/oder den physikalischen Kennzeichen der Umgebungsgeräusche ist in einer weiteren Variante dieser Ausführungsform ein Analysieren, welchen Einfluss die Art und/oder die physikalischen Kennzeichen der Umgebungsgeräusche auf das subjektive Bewertungsergebnis, das bei dieser Art und/oder diesen physikalischen Kennzeichen der Umgebungsgeräusche erhalten wurde, haben.

In dieser Variante dieser Ausführungsform kann/können somit auch Art und/oder physikalische Kennzeichen der Umgebungsgeräusche herangezogen werden um zu analysieren, welchen Einfluss sie auf das subjektive Bewertungsergebnis, das bei dieser Art und/oder diesen physikalischen Kennzeichen der Umgebungsgeräusche erhalten wurde, haben.

Nach dem erwähnten Analysieren, welchen Einfluss die Art und/oder den physikalischen Kennzeichen der Umgebungsgeräusche auf das subjektive Bewertungsergebnis, das bei dieser Art und/oder diesen physikalischen Kennzeichen der Umgebungsgeräusche erhalten wurde, haben, kann als weiterer Schritt erfolgen:
- Änderung eines Betriebszustandes der Maschine, des Flugzeugs oder Fahrzeugs zur Erreichung, bei den gegebenen Umgebungsgeräuschen, eines subjektiven Bewertungsergebnisses, das einem geänderten vorgegebenen Bewertungsergebnis entspricht, vorzugsweise einem positiven oder stärker positiven Bewertungsergebnis.

Hierbei kann, über eine rein statistische Betrachtung in der Datenauswertung hinaus, abgeleitet werden, ob und in welchem Ausmaß eine Änderung in den Betriebszuständen, z.B. die Veränderung in der Rotationsgeschwindigkeit, bei einem gegebenem Umgebungsgeräuschszenario (bspw. eine städtisches Szenario mit Verteilungsmustern akustischer Energie in Frequenzbereichen, wie sie für Straßenverkehrslärmbelastung typisch ist) zu einer Änderung/Verbesserung der subjektiven Bewertung einer Flugzeugkonfiguration beitragen kann.

In einer Ausführungsform des Verfahrens werden bei dem Analysieren der Art der Umgebungsgeräusche die Umgebungsgeräusche nach Ihrer Quelle klassifiziert, wobei der Bezug, insbesondere eine Gewichtung, des subjektiven Bewertungsergebnisses je nach Klassifizierung der Quelle unterschiedlich ist.

Eine Klassifizierung kann beispielsweise mittels eines Algorithmus erfolgen.

Quellen bzw. Klassifizierungen sind beispielsweise und ohne Einschränkung: Stimmen, Straßenverkehr, Musik.

Erfasste Umgebungsgeräusche können automatisch klassifiziert werden.

Die Klassifizierung der Nutzungsumgebung kann alternativ oder kumulativ wie folgt erfolgen:
1) Klassifizierung der Nutzungsumgebung auf dem Endgerät, vorzugsweise durch numerische Verfahren.
   Bei einer Aufnahme von Außengeräuschen kann eine Klassifizierung der Umgebungsgeräusche erfolgen z.B. in ruhige und belebte Umgebung. Zusätzlich kann der geolokalisierte Standort (über Endgerätschnittstellen) als weitere Information hinzugefügt werden, zur Unterstützung der Kategorisierung. Die Geolokalisation kann eine Information geben, ob die Testperson sich in einer belebten Umgebung befindet oder in einer ruhigen Umgebung. Dadurch können die mobilen Hörversuchsdaten für eine statistische Auswertung angereichert werden.
2) Kategorisierung der Nutzungsumgebung auf einem externen Server, vorzugsweise durch numerische Verfahren, Aufgenommene Außengeräuschen können durch leistungsfähige Verfahren auf einem externen Server klassifiziert werden und mit Ergebnissen zu der Klassifizierung auf dem Endgerät hinzutreten, um so die mobilen Hörversuchsdaten für eine statistische Auswertung anzureichern.

In einer Ausführungsform des Verfahrens erfolgt bei dem Analysieren der Umgebungsgeräusche hinsichtlich physikalischer Kennzeichen, eine Analyse von zumindest Lautstärke, Schalldruckpegel, Frequenzspektrum, Periodizität, Tonalität, temporalen Mustern und/oder Frequenz der Umgebungsgeräusche.

In einer Ausführungsform des Verfahrens weist das Verfahren auf:
- Messen von Vitalparametern der Testperson mit dem Endgerät oder mit einem mit dem Endgerät gekoppelten Erfassungsgerät während der Wiedergabe der Audiosignale und/oder während des Bewertens des Höreindrucks der Audiosignale,
- Ermitteln eines Bezugs des subjektiven Bewertungsergebnisses zu den Vitalparametern.

Ein mit dem Endgerät gekoppeltes Erfassungsgerät ist beispielsweise eine Smartwatch oder ein Fitness-Armband.

Zum Messen von Vitalparametern können in dem Endgerät oder dem gekoppelten Erfassungsgerät vorhandene Sensoren dienen, wie Kameras, Bewegungssensoren, Mikrofone etc.

In dieser Ausführungsform können die Vitalparameter herangezogen werden, um das subjektive Bewertungsergebnis, das bei diesen Vitalparametern erhalten wurde, für den weiteren Verfahrensablauf zu modifizieren. Es kann ein Zusammenhang der Parameterwerte, oder der Sätze der Parameterwerte, mit dem modifizierten subjektiven Bewertungsergebnis erhalten werden. Die Modifizierung kann eine Gewichtung sein.

Das Ermitteln eines Bezugs des subjektiven Bewertungsergebnisses zu den Vitalparametern ist in einer bevorzugten Ausführungsform eine Gewichtung des subjektiven Bewertungsergebnisses mit den Vitalparametern. An vorigem Beispiel eines Flugzeugs mit verschiedenen Stressniveaus als Vitalparameter soll dies verdeutlicht werden. Das Stressniveau kann durch Herzfrequenz und Blutdruck ermittelt sein. Dasselbe Überfluggeräusch wird bei einem hohen Stressniveau als störender empfunden als bei geringem Stressniveau. Obwohl die wiedergegebenen Audiosignale auf dem Endgerät, welche das Geräusch der Maschine, des Flugzeugs oder Fahrzeugs auf Basis der eingegebenen Parameterwerte wiedergeben, dieselben sind, weichen daher die subjektiven Bewertungsergebnisse ja nach Stressniveau der Testperson ab. Durch eine Gewichtung des subjektiven Bewertungsergebnisses kann daher diese Abweichung verringert oder nivelliert werden. Die Vorgabe für das Konstruieren oder Betreiben eines Flugzeugs kann derart sein, bei dem Betreiben Parameterwerte verwendet werden, die zu Geräuschen des Flugzeugs oder Fahrzeugs führen, die mit einem subjektiven Bewertungsergebnis, das einem vorgegebenen Bewertungsergebnis bei geringem Stressniveau entspricht, vorzugsweise einem positiven Bewertungsergebnis, korrelieren. In diesem Fall kann das Bewertungsergebnis bei hohem Stressniveau geringer gewichtet werden. Alternativ ist der umgekehrte Fall denkbar.

Das Ermitteln eines Bezugs des subjektiven Bewertungsergebnisses zu den Vitalparametern umfasst in einer weiteren bevorzugten Ausführungsform ein Prüfen der Plausibilität des subjektiven Bewertungsergebnisses anhand der Vitalparameter.

Hierbei werden die Vitalparameter zur Verifikation der abgegebenen, subjektiven Einschätzung des Geräusches bzw. der Audiosignale von der Testperson (angenehme/unangenehme Bewertung) genutzt. Beispiel kann dies wie folgt erfolgen: eine Person bewertet ein Geräusch als angenehm, aus den Vitalparametern (z.B. Sauerstoff im Blut und Herzfrequenz) lässt sich aber schließen, dass der augenblickliche Stresslevel erhöht war. In diesem Beispiel kann eine oben genannte Gewichtung derart vorgenommen werden, dass das angeblich positive subjektive Bewertungsergebnis aufgrund gegen eine solches Bewertungsergebnis sprechender Vitalparameter schwächer gewichtet wird.

In einer Ausführungsform des Verfahrens weist das Verfahren auf:
- Messen von Vitalparametern der Testperson mit dem Endgerät oder mit einem mit dem Endgerät gekoppelten Erfassungsgerät während der Wiedergabe der Audiosignale und/oder während des Bewertens des Höreindrucks der Audiosignale,
- Ermitteln eines Zusammenhangs der Parameterwerte, oder von Sätzen der Parameterwerten, mit den Vitalparametern,
- Konstruieren, Optimieren des technischen Designs und/oder Betreiben der Maschine, des Flugzeugs oder Fahrzeugs unter Einbeziehung des Zusammenhangs der Parameterwerte, oder der Sätze der Parameterwerte, mit den Vitalparametern, wobei bei dem Konstruieren, dem Optimieren des technischen Designs und/oder dem Betreiben Parameterwerte verwendet werden, die im Betrieb der Maschine, des Flugzeugs oder des Fahrzeugs zu Geräuschen der Maschine, des Flugzeugs oder Fahrzeugs führen, die mit Vitalparametern, welche vorgegebenen Vitalparametern entsprechen, korrelieren.

Vorgegebene Parameterwerte sind vorzugsweise solche, die einem gesunden Zustand der Person zugeordnet werden können, wie Blutdruck in einem definierten Normalbereich, Stresslevel in einem definierten Normbereich oder Herzschlag in einem definierten Normbereich.

In dieser Ausführungsform werden die Vitalparameter oder Änderungen in den Vitalparametern neben dem subjektiven Bewertungsergebnis, bei dem es sich um eine bewusst verbalisierte Bewertung handeln kann, selbst als Kriteriumsvariable betrachtet. Das bedeutet, dass die Ergebnisse und möglichen Zusammenhänge zwischen den Vitalparametern und Änderungen in den Konfigurationen und Betriebszuständen neben dem subjektiven Bewertungsergebnis dazu dienen, vorteilhafte Konfigurationen und Betriebszustände zu identifizieren.

Das Messen von Vitalparametern kann auf verschiedenem Wege erfolgen. Aufgezählt werden nachfolgende, nicht abschließende Beispiele.
- Bewegungssensoren des Endgeräts: Die Auswertung von Bewegungsdaten erlaubt Rückschlüsse auf die Aktivitäten von Testpersonen während der Durchführung des Verfahrens [G. M. Harari, S. R. Müller, M. S. Aung, und P. J. Rentfrow, "Smartphone sensing methods for studying behavior in everyday life", Current Opinion in Behavioral Sciences, Bd. 18, S. 83-90, Dez. 2017, doi: 10.1016/j.cobeha.2017.07.018; W. Sousa Lima, E. Souto, K. EI-Khatib, R. Jalali, und J. Gama, "Human Activity Recognition Using Inertial Sensors in a Smartphone: An Overview", Sensors, Bd. 19, Nr. 14, S. 3213, Juli 2019, doi: 10.3390/s19143213].
- Kamera des Endgeräts, z.B. Smartphonekamera: Blickbewegungen und Pupillendilatation. Augenbewegungen dienen in der Psychologie als Hinweise auf die Aufmerksamkeitsverteilung von Proband*innen. Jüngere Arbeiten kombinieren die Verfügbarkeit von Smartphone-Kameras mit Algorithmen, welche die (im Vergleich zu stationären Eye-Tracking-Geräten) hohe Varianz im Bildschirmabstand, Kameraposition, Wackeln usw. ausgleichen können [B. Brousseau, J. Rose, und M. Eizenman, "SmartEye: An Accurate Infrared Eye Tracking System for Smartphones", in 2018 9th IEEE Annual Ubiquitous Computing, Electronics & Mobile Communication Conference (UEMCON), New York City, NY, USA: IEEE, Nov. 2018, S. 951-959. doi: 10.1109/UEMCON.2018.8796799; C. Barry, J. De Souza, Y. Xuan, J. Holden, E. Granholm, und E. J. Wang, "At-Home Pupillometry using Smartphone Facial Identification Cameras", in CHI Conference on Human Factors in Computing Systems, New Orleans LA USA: ACM, Apr. 2022, S. 1-12. doi: 10.1145/3491102.3502493; N. Valliappan u. a., "Accelerating eye movement research via accurate and affordable smartphone eye tracking", Nat Commun, Bd. 11, Nr. 1, S. 4553, Sep. 2020, doi: 10.1038/s41467-020-18360-5]. Veränderungen der Pupillenweite sind als unwillkürliche Reaktionen auf Überraschungen, Belohnungen und andere Stimuli untersucht worden. Z.B. könnte ein besonders unangenehmes Flugzeuggeräusch eine stärkere Blickreaktion verursachen.
- Mikrofon: Atemfrequenz. Erste Arbeiten erzielten anhand von Mikrofonaufnahmen relativ genaue Messungen der Atemfrequenz der Nutzenden [K. K. Phokela und V. Naik, "Use of Smartphone's Headset Microphone to Estimate the Rate of Respiration", in 2020 International Conference on COMmunication Systems & NETworkS (COMSNETS), Bengaluru, India: IEEE, Jan. 2020, S. 64-69. doi: 10.1109/COMSNETS48256.2020.9027297; M. Alkhodari und A. H. Khandoker, "Detection of COVID-19 in smartphone-based breathing recordings: A pre-screening deep learning tool", PLoS ONE, Bd. 17, Nr. 1, S. e0262448, Jan. 2022, doi: 10.1371/journal.pone.0262448]. Diese kann als Reaktion auf Stimuli steigen oder senken. Sie stellt also ein weiteres implizites Maß für die Reaktion der Nutzenden auf die Geräusche von Maschinen, Fahrzeugen oder Flugzeugen dar.
- Smartwatch: Aktuelle Forschung untersucht den Zusammenhang zwischen aus Smartwatches abgeleiteten Signalen zur Herzratenvariabilität (HRV) und akutem Stressempfinden bzw. Stress- vs. Ruhezustand [T. Chalmers,B.A. Hickey, P. Newton,C.-T. Lin, D. Sibbrit,C.S. McLachlan, R. Clifton-Bligh, . Morley, S. Lal. Stress Watch: The Use of Heart Rate and Heart Rate Variability to Detect Stress: A Pilot Study Using Smart Watch Wearables. Sensors 2022, 22, 151. / https://doi.org/10.3390/s22010151); P.E. Velmovitsky, M. Lotto, P. Alencar, S.T. Leatherdale, D. Cowan and P.P Morita. Can heart rate variability data from the Apple Watch electrocardiogram quantify stress? Front. Public Health. 2023 11:1178491. doi: 10.3389/fpubh.2023.1178491]. Die Ergebnisse sind zwar noch nicht konsistent im Hinblick auf die Qualität der Vorhersage des Stresserlebens, die so gewonnenen Daten scheinen aber zwischen Belastungs- und Ruhezustand unterscheiden zu können.

In einer Ausführungsform des Verfahrens sind die Vitalparameter ausgewählt aus einem oder mehreren der Folgenden: Herzfrequenz, Herzratenvariabilität, Blutdruck, Körperbewegung, Augenbewegung, Pupillendilatation, Schlafdauer, Atemfrequenz der Testperson.

In einer Ausführungsform des Verfahrens weist das Verfahren auf:
- Ermitteln eines Bezugs des subjektiven Bewertungsergebnisses zu einem Schalldruckpegel der Wiedergabe der Audiosignale auf dem Endgerät.

In dieser Ausführungsform kann der Schalldruckpegel der Wiedergabe der Audiosignale auf dem Endgerät herangezogen werden, um das subjektive Bewertungsergebnis, das bei diesem Schalldruckpegel erhalten wurde, für den weiteren Verfahrensablauf zu modifizieren. Es kann ein Zusammenhang der Parameterwerte, oder der Sätze der Parameterwerte, mit dem modifizierten subjektiven Bewertungsergebnis erhalten werden. Die Modifizierung kann eine Gewichtung sein.

Das Ermitteln eines Bezugs des subjektiven Bewertungsergebnisses zu dem Schalldruckpegel ist in einer bevorzugten Ausführungsform eine Gewichtung des subjektiven Bewertungsergebnisses mit dem Schalldruckpegel. Am Beispiel eines Flugzeugs mit verschiedenen Schalldruckpegel der Wiedergabe soll dies verdeutlicht werden. Dasselbe Überfluggeräusch wird bei einem hohen Schalldruckpegel der Wiedergabe als störender empfunden als bei geringem Schalldruckpegel. Obwohl die wiedergegebenen Audiosignale auf dem Endgerät, welche das Geräusch der Maschine, des Flugzeugs oder Fahrzeugs auf Basis der eingegebenen Parameterwerte wiedergeben, dieselben sind, weichen daher die subjektiven Bewertungsergebnisse ja nach Schalldruckpegel der Wiedergabe ab. Durch eine Gewichtung des subjektiven Bewertungsergebnisses kann daher diese Abweichung verringert oder nivelliert werden. Die Gewichtung kann derart erfolgen, dass ein durchschnittlicher Schalldruckpegel der Wiedergabe als Standardbedingung zugrunde gelegt wird.

In einer Ausführungsform des Verfahrens weist das Verfahren auf:
- In Beziehung setzen des subjektiven Bewertungsergebnisses mit einer technischen Klasse des Endgeräts.

Beispielhafte technische Klassen des Endgeräts, speziell des Wiedergabegeräts, sind: Bezüglich der Konnektivität Bluetooth- oder kabelgebunden, bezüglich der Trageform inear, on-ear oder bone conduction, bezüglich der Bauweise offen, halboffen oder geschlossen, bezüglich der Frequenzkurve (grob unterteilt) tiefenlastig, höhenlastig oder neutral.

In dieser Ausführungsform kann die technische Klasse des Endgeräts herangezogen werden, um das subjektive Bewertungsergebnis, das mit dieser technischen Klasse des Endgeräts erhalten wurde, für den weiteren Verfahrensablauf zu modifizieren. Es kann ein Zusammenhang der Parameterwerte, oder der Sätze der Parameterwerte, mit dem modifizierten subjektiven Bewertungsergebnis erhalten werden. Die Modifizierung kann eine Gewichtung sein.

In einer Ausführungsform umfasst das Bewerten des Höreindrucks eines oder mehreres der Folgenden, in beliebiger Kombination:
- Bewerten des Höreindrucks anhand eines Maßes einer Beeinträchtigung,
- Bewerten einer Bedrohlichkeit durch das Geräusch,
- Bewerten einer Vertrautheit mit dem Geräusch,
- Bewerten einer Geräuschqualität des Geräusches anhand eines semantischen Differenzials.

Das subjektive Bewertungsergebnis kann sich sowohl auf globale Beschreibungsmerkmale (z.B. "belästigend") als auch auf spezifische Beschreibungsmerkmale (z.B. anhand von Adjektivpaaren eines Semantischen Differenzials) beziehen.

Das Bewerten des Höreindrucks mittels eines Maßes der Beeinträchtigung (auch: annoyance) kann beispielsweise auf einer Bewertungsskala erfolgen, beispielsweise einer Skala von angenehm bis unangenehm.

Ein Beispiel für das Bewerten des Höreindrucks mit einem oder mehreren Adjektivpaaren ist das Adjektivpaar schrill-dumpf.

Ein semantisches Differential (SD) ist ein psychologisches Werkzeug, das zur Beschreibung verschiedenster psychologischer Faktoren, aber eben auch der Erfassung der sogenannten Geräuschqualität dient. Die Geräuschqualität beschreibt die empfundene akustische Natur eines Geräusches jenseits einer eher globalen "gut"-"schlecht" oder "angenehm"-"unangenehm"-Dimension.

Beim Semantischen Differential erfolgt vorzugsweise das Bewerten des Höreindrucks mit einem oder mehreren Adjektivpaaren.

Das SD beinhaltet vorzugsweise die subjektive Beurteilung von Geräuschen, bzw. das Bewerten eines Höreindrucks, entlang mehrerer unipolarer und / oder bipolarer Bedeutungsdimensionen, vorzugsweise in Form von Adjektivpaaren.

Im Kontext psychoakustischer Geräuschbewertungen dient es dazu, die subjektiv empfundene Geräuschwahrnehmung zu quantifizieren. SD ermöglichen somit eine Einordnung von Geräuschen in ein homogenes Referenzsystem und Vergleiche der Geräusche anhand semantischer Beschreibungsmerkmale. Die Bewertungen lassen sich mit psychoakustischen Metriken wie Lautheit, Schärfe, Rauigkeit oder Tonhaltigkeit in Beziehung setzen bzw. korrelieren. Es kann daraus dann, analog zu einer eher globalen Bewertung mittels eines Maßes der Beeinträchtigung (annoyance), wie "angenehm" - "unangenehm", wieder eine Rückkopplung zu Konstruktionsparametern gestellt werden und bei dem Konstruieren das Design gezielt optimiert werden. Hierauf wird in nachfolgenden Ausführungsformen noch eingegangen.

Nach dem Bewerten gemäß dieser Ausführungsform wird das subjektive Bewertungsergebnis auf Basis des Bewertens erhalten.

Aus den genannten Varianten des Bewertens können eine oder mehrere Zusammenhänge zu psychoakustischen Kennwerten, wie Tonalität, Fluktuationsstärke abgeleitet werden. Aus der Korrelation/ den Korrelationen kann dann eine Rückkopplung zu Konstruktionsparametern hergestellt werden und bei dem Konstruieren das Design gezielt optimiert werden. Hierauf wird in nachfolgenden Ausführungsformen noch eingegangen.

In einer Ausführungsform des Verfahrens weist das Verfahren auf:
- Analysieren der Audiosignale hinsichtlich psychoakustischer Kennwerte,
- Ermitteln eines Zusammenhangs der psychoakustischen Kennwerte der Audiosignale mit dem subjektiven Bewertungsergebnis, und weiterhin mit den Parameterwerten,

wobei das Konstruieren, Optimieren des technischen Designs und/oder Betreiben der Maschine, des Flugzeugs oder Fahrzeugs zusätzlich unter Einbeziehung des Zusammenhangs der psychoakustischen Kennwerte der Audiosignale mit dem subjektiven Bewertungsergebnis erfolgt,
wobei bei dem Konstruieren, Optimieren des technischen Designs und/oder Betreiben Parameterwerte verwendet werden, welche zu psychoakustischen Kennwerten von durch den Betrieb der Maschine, des Flugzeugs oder Fahrzeugs verursachten Geräuschen führen, die mit einem subjektiven Bewertungsergebnis, das einem vorgegebenen Bewertungsergebnis entspricht, vorzugsweise einem positiven Bewertungsergebnis, korrelieren.

In dieser Ausführungsform wird beispielsweise ein Zusammenhang hergestellt zwischen positiv / negativ bewerteten Audiosignalen und psychoakustischen Kennwerten (z.B. Tonalität, Schärfe, Schwankungsstärke) der Audiosignale.

Die psychoakustischen Kennwerte, wie Lautheit, Schärfe, Fluktuationsstärke, Rauigkeit, Tonalität, psychoakustische Lästigkeit, quantifizieren die subjektive Wahrnehmung von Schall durch das menschliche Gehör, im Gegensatz zum Schalldruckpegel, der den Schall anhand der rein physikalischen Druckschwankungen quantifiziert.

Das subjektive Bewertungsergebnis ist dann zusätzlich mit den psychoakustischen Kennwerten verknüpft.

Insbesondere erfolgt eine Korrelation der präferierten Audiosignalen mit den Konstruktionsparametern des Zielproduktes und den aus den Audiosignalen erhaltenen psychoakustischen Kennwerten, um eine Information zu erhalten, wie das Konstruieren zu erfolgen hat.

Durch diese Ausführungsform kann ermittelt werden, wie die psychoakustischen Kennwerte mit den Konstruktionsparametern verknüpft sind, welche Konstruktionsparameter zu angenehmen oder unangenehmen Höreindrücken führen, welche psychoakustischen Kennwerte diese Wahrnehmung bedingen, ob als angenehm bewerteten Geräusche weniger physiologische Reaktionen hervorrufen als Geräusche, die als lästig, unangenehm oder bedrohlich eingeschätzt wurden. Die Beantwortung dieser Fragen ermöglicht Handlungsempfehlungen für die lärmwirkungsoptimierte Konstruktion, beispielsweise von Triebwerken, abzuleiten. Insbesondere können Auslegungsrichtlinien sowie konkrete Konstruktionen für zukünftige Flugzeugantriebe abgeleitet werden, die ermöglichen, dass der Höreindruck möglichst angenehm und als wenig störend empfunden wird (entsprechend des design-to-perceived-noise Ansatzes).

Das Analysieren der Audiosignale hinsichtlich psychoakustischer Kennwerte, insbesondere solcher, die für eine positive / negative Geräuschbewertung maßgeblich sind, kann durch etablierte kommerzielle Software zur Anwendung kommen (z.B. HEAD Artemis Suite) oder open-source Programme (z.B. SQAT).

In einer Ausführungsform des Verfahrens sind die psychoakustischen Kennwerte bzw. psychoakustischen Parameter ausgewählt aus einem oder mehreren der Folgenden: Lautheit, Frequenz, Tonalität, Rauigkeit, Fluktuationsstärke, Schalldruckpegel, Effective Perceived Noise Level (EPNL), Schallbelastungspegel (SEL) und/oder Schärfe.

Durch die Einschätzung der Testpersonen erfolgt eine Bewertung der Audiosignale. Anhand dieser Bewertungen unterschiedlicher Testpersonen können Geräusche gruppiert werden, z.B. im Rahmen einer Clusteranalyse. Die Dateien von Audiosignalen können gelabelt und später gemäß des Klangempfindens gruppiert (z.B. angenehm vs. unangenehm) werden.

Bei dem Analysieren der Audiosignale, werden vorzugsweise Geräuschbestandteile ermittelt, die beispielsweise für unangenehm empfundene Geräusche verantwortlich sind. Dies können einzelne Frequenzen, Frequenzabfolgen, Frequenzkombinationen etc. sein.

Für die Analyse und das Ermitteln erwähnten Zusammenhangs der psychoakustischen Kennwerte der Audiosignale mit dem subjektiven Bewertungsergebnis sind zwei Verfahren bevorzugt, die in nachfolgenden Ausführungsformen beschrieben werden: Frequenzzerlegungsverfahren und maschinelle Lernverfahren.

In einer Ausführungsform des Verfahrens erfolgt das Ermitteln eines Zusammenhangs der physikalischen Kennzeichen der Audiosignale mit dem subjektiven Bewertungsergebnis durch ein Frequenzzerlegungsverfahren , wobei Frequenzen, Frequenzabfolgen und/oder Frequenzkombinationen ermittelt werden, die mit einem subjektiven Bewertungsergebnis, das einem vorgegebenen Bewertungsergebnis entspricht, vorzugsweise einem positiven Bewertungsergebnis, korrelieren.

Ein beispielhaftes Frequenzzerlegungsverfahren ist die Empirical Mode Decomposition (EMD). Es handelt sich hierbei um eine Methode zur Analyse von nichtlinearen und nichtstationären Signalen. Es können einzelne Frequenzen aus dem vollständigen Signal isoliert und analysiert werden. Beispielsweise ist es so möglich, Audiosignale hinsichtlich bestimmter Frequenzen zu untersuchen und Gemeinsamkeiten zwischen angenehm oder unangenehm empfundenen Geräuschen zu ermitteln.

In einer Ausführungsform des Verfahrens erfolgt das Ermitteln eines Zusammenhangs der psychoakustischen Kennwerte der Audiosignale mit dem subjektiven Bewertungsergebnis, der ein Zusammenhang physikalischer Kennzeichen der Audiosignale mit dem subjektiven Bewertungsergebnis ist, durch eine Spektrogrammanalyse. Ein Spektrogramm zeigt die Intensität (Lautstärke) verschiedener Frequenzen über die Zeit hinweg. Die horizontale Achse repräsentiert die Zeit, die vertikale Achse die Frequenz, und die Farbintensität stellt die Amplitude oder Lautstärke der jeweiligen Frequenz dar.

Bevorzugt erfolgt bei der Spektrogrammanalyse eine oder mehrere der folgenden Analysen:
- Bestimmung des dominanten Frequenzbereichs eines Signals.
- Detektion charakteristischer Frequenzmuster.
- Erfassung zeitlicher Veränderungen im Audiosignal.
- Ereigniserkennung durch wiederkehrende Muster.
- Erkennen und Isolieren von Störgeräuschen außerhalb des gewünschten Frequenzbereichs.
- Mustererkennung zur automatisierten Analyse.
- Bandweise Energiemessung zur Identifikation dominanter Frequenzen.

Demgemäß können ein dominanter Frequenzbereich eines Signals, ein charakteristisches Frequenzmuster, eine zeitliche Veränderung im Audiosignal, wiederkehrende Muster, Störgeräusche außerhalb eines gewünschten Frequenzbereichs, Muster zur automatisierten Analyse und/oder dominante Frequenzen ermittelt werden, die mit einem subjektiven Bewertungsergebnis, das einem vorgegebenen Bewertungsergebnis entspricht, vorzugsweise einem positiven Bewertungsergebnis, korrelieren.

In einer Ausführungsform des Verfahrens erfolgt das Ermitteln eines Zusammenhangs der psychoakustischen Kennwerte der Audiosignale mit dem subjektiven Bewertungsergebnis, der ein Zusammenhang physikalischer Kennzeichen der Audiosignale mit dem subjektiven Bewertungsergebnis ist, durch ein maschinelles Lernverfahren, wobei Frequenzen, Frequenzabfolgen und/oder Frequenzkombinationen ermittelt werden, die mit einem subjektiven Bewertungsergebnis, das einem vorgegebenen Bewertungsergebnis entspricht, vorzugsweise einem positiven Bewertungsergebnis, korrelieren.

Durch diese Ausführungsform ist es möglich, als angenehm oder als unangenehm empfundene Geräuschanteile sowie deren Quellen zu identifizieren, um diese während des Entwicklungsprozesses, z.B. der Technologie im Bereich Luftfahrt, zu berücksichtigen.

Das maschinelle Lernfahren beruht vorzugsweise auf einer künstlichen Intelligenz.

Insbesondere erfolgt mit dem durch das erfindungsgemäße Verfahren erhaltenen Zusammenhang der Parameterwerte, oder von Sätzen der Parameterwerten, mit dem subjektiven Bewertungsergebnis, oder mit mehreren solcher erhaltenen Zusammenhänge, das Training einer künstlichen Intelligenz. Dies ermöglicht das Bewerten eines Höreindrucks der Audiosignale durch ein maschinelles Verfahren statt durch eine Testperson.

Eine künstliche Intelligenz kann insbesondere die Zusammenhänge zwischen einer Geräuschsignatur und der empfundenen Belästigung erlernen. Auf Basis der trainierten Daten ist es dann möglich, eine empfundene Lärmbelästigung auch für bisher nicht von Testpersonen bewertete Konstruktions-Parameterwerte (neue Konfiguration) vorherzusagen. Vorhersagen über die Psychoakustik dieser neuen Konfigurationen sind ebenfalls möglich. Möglich wäre dies u.a. durch die Integration von XAI Ansätzen zur Erklärung der Merkmale in der Geräuschsignatur, die eine empfundene Belästigungswirkung bedingen.

Audiosignale können als Spektrogramme dargestellt werden und eine künstliche Intelligenz lernt, von den Spektrogrammen auf die subjektiven Bewertungen zu schließen. Das trainierte System ist später in der Lage, neue Geräusche von Audiosignalen, die im Spektrum der Trainingsdaten liegen, hinsichtlich des Klangempfindens eines Menschen bzw. einer Testperson, zu bewerten. Zudem ist es möglich, die Entscheidungsfindung des Kl-Algorithmus zu erklären. Es können die Bereiche im Spektrogramm hervorgehoben werden, die zur Entscheidung des Algorithmus der KI geführt haben. Diese Bereiche stehen für bestimmte Frequenzgruppen, können aber ebenso hinsichtlich ihres Ursprungs der Entstehung interpretiert werden.

In einer weiteren Ausführungsform weist das Verfahren auf, nach dem Eingeben des subjektiven Bewertungsergebnisses durch die Testperson auf dem Endgerät oder nach dem Ermitteln des Zusammenhangs der Parameterwerte, oder von Sätzen der Parameterwerten, mit dem subjektiven Bewertungsergebnis:
- Ändern der Parameterwerte der Maschine, des Flugzeugs oder Fahrzeugs, wobei die Parameterwerte Konstruktions-Parameterwerte, technische Design-Parameterwerte und/oder Betriebs-Parameterwerte der Maschine, des Flugzeugs oder Fahrzeugs sind,
- Wiedergabe von geänderten Audiosignalen auf dem Endgerät, welche das Geräusch der Maschine, des Flugzeugs oder Fahrzeugs auf Basis der geänderten Parameterwerte wiedergeben,
- Bewerten eines Höreindrucks der geänderten Audiosignale durch die Testperson und Erhalten eines weiteren subjektiven Bewertungsergebnisses der Testperson,
- Eingeben des weiteren subjektiven Bewertungsergebnisses durch die Testperson auf dem Endgerät,
wobei bei dem Ermitteln des Zusammenhangs der Parameterwerte, oder von Sätzen der Parameterwerten, mit dem subjektiven Bewertungsergebnis das weitere subjektive Bewertungsergebnis mit einbezogen wird.

In dieser Ausführungsform wird ein erstes subjektives Bewertungsergebnis zum Anlass genommen, Parameterwerte zu ändern. Es können dann Parameterwerte geändert werden, durch die Testperson oder automatisiert, um geänderte Audiosignale und ein weiteres subjektives Bewertungsergebnis zu erhalten. Diese Schritte können wiederholt werden, um Parameterwerte für ein weiteres Bewertungsergebnis zu erhalten. Zudem kann der Zusammenhang der Parameterwerte, oder von Sätzen der Parameterwerten, mit dem subjektiven Bewertungsergebnis durch weitere Daten gestützt oder vervollständigt werden.

Diese Ausführungsform ist besonders vorteilhaft, wenn das Bewerten des Höreindrucks das Bewerten einer Geräuschqualität des Geräusches anhand eines semantischen Differenzials (SD) ist.

Die Ausführungsform gibt die Möglichkeit ein bestehendes Geräusch zu modifizieren und neu zu bewerten. Die Änderung des Geräusches erfolgt dabei über eine Änderung der Konstruktionsparameter. Unter Verwendung des SD kann dann beurteilt werden, welche Änderung der Parameterwerte, vorzugsweise Konstruktionsparameterwerte, welchen Höreindruck erzeugt. Dies gibt die Möglichkeit für ein bestehendes Geräusch durch eine Änderung der Parameterwerte, vorzugsweise Konstruktionsparameterwerte, den geänderten Höreindruck sofort hörbar zu machen und spezifisch mit Hilfe des SD zu beschreiben.

Nachfolgend wird die Erfindung durch Ausführungsbeispiele beschrieben. Es zeigen:
- Fig. 1: einen prinzipiellen Verfahrensablauf eines erfindungsgemäßen Verfahrens;
- Fig. 2: ein Detail aus dem Verfahrensablauf.

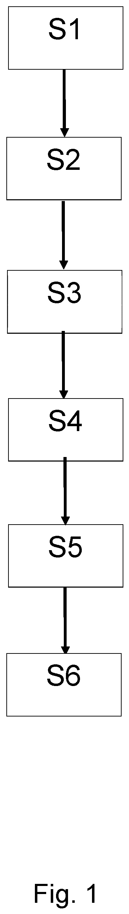

Fig. 1 stellt das Verfahren am speziellen Beispiel der Konstruktion eines dar. Der in Fig. 1 gezeigte Verfahrensablauf besteht aus:

| | |
|---|---|
| S1: | dem Eingeben von Parameterwerten eines Flugzeugs durch zumindest eine Testperson auf einem Endgerät, wobei die Parameterwerte Konstruktions-Parameterwerte des Flugzeugtriebwerkes sind. |
| S2: | der Wiedergabe von Audiosignalen (S2) auf dem Endgerät, welche das Geräusch des Flugzeugs auf Basis der eingegebenen Parameterwerte wiedergeben. |
| S3 | dem Bewerten eines Höreindrucks (S3) der Audiosignale durch die Testperson und Erhalten eines subjektiven Bewertungsergebnisses der Testperson. |
| S4 | dem Eingeben des subjektiven Bewertungsergebnisses durch die Testperson auf dem Endgerät, |
| S5 | dem Ermitteln eines Zusammenhangs der Parameterwerte, oder von Sätzen der Parameterwerten, mit dem subjektiven Bewertungsergebnis, |
| S6 | dem Konstruieren des Flugzeugs unter Einbeziehung des Zusammenhangs der Parameterwerte, oder der Sätze der Parameterwerte, mit dem subjektiven Bewertungsergebnis, wobei bei dem Konstruieren und/oder Betreiben Parameterwerte verwendet werden, die im Betrieb zu Geräuschen des Flugzeugs führen, die mit einem subjektiven Bewertungsergebnis, das einem vorgegebenen Bewertungsergebnis entspricht, vorzugsweise einem positiven Bewertungsergebnis, korrelieren. |

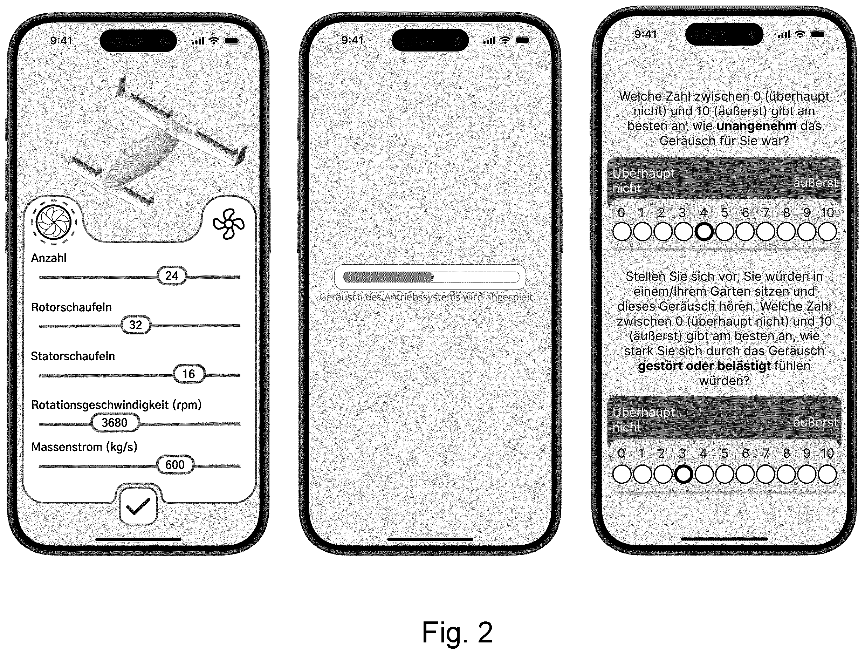

Die Fig. 2 zeigt die Schritte S1-S4 detaillierter anhand eines Smartphones mit zugehöriger App als Endgerät.

In Fig. 2 links ist gezeigt, wie die nicht gezeigte Testperson, welche das Smartphone im Besitz hat, die Konstruktions- bzw. Betriebsparameterwerte Anzahl der Antriebe mit dem Wert 24, die Anzahl der Rotorschaufeln eines Triebwerks mit dem Wert 2, die Anzahl der Statorschaufeln eines Triebwerks mit dem Wert 16, die Rotationsgeschwindigkeit der Antriebe mit 3680 rpm und den Massestrom mit dem 600 kg/s wählt.

Daraufhin wird, wie in der Mitte der Fig. 2 gezeigt, aus einem externen Speicher (Datenbank) eine Audiodatei abgerufen und wiedergegeben, in Form von Audiosignalen, welche das Geräusch des Flugzeugs auf Basis dieser Konstruktionsparameterwerte wiedergeben.

In Fig. 2 rechts ist gezeigt, dass die Testperson eine Bewertung des Höreindrucks der Audiosignale vorgenommen hat und ein subjektives Bewertungsergebnis eingibt. Auf einer Skala von 0 bis 10 wird eingegeben, wie unangenehm das Geräusch der Audiosignale aus der Audiodatei empfunden wird, wobei die Testperson hier den Wert 4 angegeben hat, im mittleren Bereich von "überhaupt nicht unangenehm" bis "äußerst unangenehm". "Überhaupt nicht unangenehm kann als positive Bewertungsergebnis gewertet werden, wobei je nah Festlegung ein Wert bis 2 oder 3 noch als positiv gelten könnte.

In einer weiteren Abfrage in Fig. 2 rechts unten wird noch eine Bewertung unter Annahme bestimmter Randbedingungen abgefragt, hier die Annahme, dass die Person in einem Garten sitzen würde, was eine ruhige Umgebung oder eine Empfindung von wenig Stress darstellen könnte. Erfindungsgemäß ist aber vorzugsweise vorgesehen, Umgebungsgeräusche und Vitalparameter mit dem Smartphone oder einer damit verbundenen Smartwatch, welche die Testperson trägt, zu ermitteln und zum Beispiel das Bewertungsergebnis rechts oben damit zu gewichten, damit bei Testpersonen mit verschiedenen Vitalparametern oder in verschiedenen Umgebungen diese Einflussfaktoren mitberücksichtigt werden können.

Sofern ein positives Bewertungsergebnis erhalten wird, beispielsweise bei einer Bewertung von 0, 1 oder 2 in der Skala rechts oben in Fig. 2, können die zugrunde liegenden Konstruktionsparameter, welche in Fig. 2 links mit diesem Bewertungsergebnis verknüpft sind, als Grundlage einer Konstruktion des konkreten Flugzeugs dienen. Es ist bevorzugt, dazu eine Vielzahl Testpersonen das Verfahren durchführen zu lassen und deren Ergebnisse statistisch auszuwerten. Ein positives Ergebnis kann beispielsweise angenommen werden, wenn im Mittel eine Bewertung von nicht größer als 1 oder 2 erhalten wird und die Standardabweichung kleiner oder gleich einem gesetzten Grenzwert ist.

## Patentansprüche

1. Verfahren zur Konstruktion, zur Optimierung des technischen Designs und/oder zum Betrieb einer Maschine, eines Flugzeugs oder Fahrzeugs aufweisend
- Eingeben (S1) von Parameterwerten der Maschine, des Flugzeugs oder Fahrzeugs durch zumindest eine Testperson auf einem Endgerät, wobei die Parameterwerte Konstruktions-Parameterwerte, technische Design-Parameterwerte und/oder Betriebs-Parameterwerte der Maschine, des Flugzeugs oder Fahrzeugs sind,
- Wiedergabe von Audiosignalen (S2) auf dem Endgerät, welche das Geräusch der Maschine, des Flugzeugs oder Fahrzeugs auf Basis der eingegebenen Parameterwerte wiedergeben,
- Bewerten eines Höreindrucks (S3) der Audiosignale durch die Testperson und Erhalten eines subjektiven Bewertungsergebnisses der Testperson,
- Eingeben (S4) des subjektiven Bewertungsergebnisses durch die Testperson auf dem Endgerät,
- Ermitteln (S5) eines Zusammenhangs der Parameterwerte, oder von Sätzen der Parameterwerten, mit dem subjektiven Bewertungsergebnis,
- Konstruieren (S6), Optimieren des technischen Designs und/oder Betreiben der Maschine, des Flugzeugs oder Fahrzeugs unter Einbeziehung des Zusammenhangs der Parameterwerte, oder der Sätze der Parameterwerte, mit dem subjektiven Bewertungsergebnis, wobei bei dem Konstruieren, dem Optimieren des technischen Designs und/oder dem Betreiben Parameterwerte verwendet werden, die im Betrieb der Maschine, des Flugzeugs oder des Fahrzeugs zu Geräuschen der Maschine, des Flugzeugs oder Fahrzeugs führen, die mit einem subjektiven Bewertungsergebnis, das einem vorgegebenen Bewertungsergebnis entspricht, vorzugsweise einem positiven Bewertungsergebnis, korrelieren.

2. Verfahren nach Anspruch 1, wobei die Parameterwerte Parameterwerte eines Antriebs der Maschine, des Flugzeugs oder Fahrzeugs sind und die Parameterwerte Konstruktions-Parameterwerte, technische Design-Parameterwerte und/oder Betriebs-Parameterwerte des Antriebs sind, und
die Audiosignale auf dem Endgerät das Geräusch des Antriebs auf Basis der eingegebenen Parameterwerte des Antriebs wiedergeben, und
das Konstruieren, Optimieren des technischen Designs und/oder Betreiben das Konstruieren, Optimieren des technischen Designs und/oder Betreiben des Antriebs ist und
bei dem Konstruieren, Optimieren des technischen Designs und/oder Betreiben Parameterwerte verwendet werden, die im Betrieb des Antriebs zu Geräuschen des Antriebs führen, die mit einem subjektiven Bewertungsergebnis, das einem vorgegebenen Bewertungsergebnis entspricht, vorzugsweise einem positiven Bewertungsergebnis, korrelieren.

3. Verfahren nach Anspruch 1 oder 2, aufweisend
- Messen von Umgebungsgeräuschen mit dem Endgerät während der Wiedergabe der Audiosignale und/oder während des Bewertens des Höreindrucks der Audiosignale
- Analysieren der Umgebungsgeräusche hinsichtlich Art und/oder physikalischer Kennzeichen,
- Ermitteln eines Bezugs des subjektiven Bewertungsergebnisses zu der Art und/oder den physikalischen Kennzeichen der Umgebungsgeräusche.

4. Verfahren nach Anspruch 3, wobei bei dem Analysieren der Art der Umgebungsgeräusche die Umgebungsgeräusche nach Ihrer Quelle klassifiziert werden, wobei der Bezug des subjektiven Bewertungsergebnisses je nach Klassifizierung der Quelle unterschiedlich ist.

5. Verfahren nach Anspruch 3 oder 4, wobei bei dem Analysieren hinsichtlich physikalischer Kennzeichen, eine Analyse von zumindest Lautstärke, Schalldruckpegel, Frequenzspektrum, Periodizität, Tonalität, temporalen Mustern und/oder Frequenz der Umgebungsgeräusche erfolgt.

6. Verfahren nach einem der Ansprüche 3-5, wobei die Art und/oder physikalische Kennzeichen der Umgebungsgeräusche herangezogen werden, um das subjektive Bewertungsergebnis, das bei diesem dieser Art und/oder diesen physikalischen Kennzeichen der Umgebungsgeräusche erhalten wurde, für den weiteren Verfahrensablauf zu modifizieren, wobei ein Zusammenhang der Parameterwerte, oder der Sätze der Parameterwerte, mit dem modifizierten subjektiven Bewertungsergebnis erhalten wird, wobei die Modifizierung vorzugsweise eine Gewichtung des subjektiven Bewertungsergebnisses ist.

7. Verfahren nach einem der vorangehenden Ansprüche, aufweisend
- Messen von Vitalparametern der Testperson mit dem Endgerät oder mit einem mit dem Endgerät gekoppelten Erfassungsgerät während der Wiedergabe der Audiosignale und/oder während des Bewertens des Höreindrucks der Audiosignale,
- Ermitteln eines Bezugs des subjektiven Bewertungsergebnisses zu den Vitalparametern,
wobei die Vitalparameter vorzugsweise ausgewählt sind aus einem oder mehreren der Folgenden: Herzfrequenz, Herzratenvariabilität, Blutdruck, Körperbewegung, Augenbewegung, Pupillendilatation, Schlafdauer, Atemfrequenz der Testperson.

8. Verfahren nach einem der vorangehenden Ansprüche, aufweisend
- Ermitteln eines Bezugs des subjektiven Bewertungsergebnisses zu einem Schalldruckpegel der Wiedergabe der Audiosignale auf dem Endgerät und vorzugsweise weiterhin aufweisend:
- In Beziehung setzen des subjektiven Bewertungsergebnisses mit einer technischen Klasse des Endgeräts.

9. Verfahren nach einem der vorangehenden Ansprüche, wobei das Bewerten des Höreindrucks eines oder mehreres der Folgenden umfasst:
- Bewerten des Höreindrucks anhand eines Maßes einer Beeinträchtigung,
- Bewerten einer Bedrohlichkeit durch das Geräusch,
- Bewerten einer Vertrautheit mit dem Geräusch,
- Bewerten einer Geräuschqualität des Geräusches anhand eines semantischen Differenzials.

10. Verfahren nach einem der vorangehenden Ansprüche, aufweisend
- Analysieren der Audiosignale hinsichtlich psychoakustischer Kennwerte,
- Ermitteln eines Zusammenhangs der psychoakustischen Kennwerte der Audiosignale mit dem subjektiven Bewertungsergebnis,
wobei das Konstruieren, Optimieren des technischen Designs und/oder Betreiben der Maschine, des Flugzeugs oder Fahrzeugs zusätzlich unter Einbeziehung des Zusammenhangs der psychoakustischen Kennwerte der Audiosignale mit dem subjektiven Bewertungsergebnis erfolgt,
wobei bei dem Konstruieren, Optimieren des technischen Designs und/oder Betreiben Parameterwerte verwendet werden, welche zu psychoakustischen Kennwerten von durch den Betrieb der Maschine, des Flugzeugs oder Fahrzeugs verursachten Geräuschen führen, mit einem subjektiven Bewertungsergebnis, das einem vorgegebenen Bewertungsergebnis entspricht, vorzugsweise einem positiven Bewertungsergebnis, korrelieren.

11. Verfahren nach Anspruch 10, wobei die psychoakustischen Kennwerte ausgewählt sind aus einem oder mehreren der Folgenden: Lautheit, Frequenz, Tonalität, Rauigkeit, Fluktuationsstärke, Schalldruckpegel, Effective Perceived Noise Level (EPNL), Schallbelastungspegel (SEL) und/oder Schärfe.

12. Verfahren nach Anspruch 10 oder 11, wobei das Ermitteln eines Zusammenhangs der psychoakustischen Kennwerte der Audiosignale mit dem subjektiven Bewertungsergebnis durch ein Frequenzzerlegungsverfahren erfolgt, wobei Frequenzen, Frequenzabfolgen und/oder Frequenzkombinationen ermittelt werden, mit einem subjektiven Bewertungsergebnis, das einem vorgegebenen Bewertungsergebnis entspricht, vorzugsweise einem positiven Bewertungsergebnis, korrelieren.

13. Verfahren nach einem der Ansprüche 10-12, wobei das Ermitteln eines Zusammenhangs der der psychoakustischen Kennwerte der Audiosignale mit dem subjektiven Bewertungsergebnis durch ein maschinelles Lernverfahren erfolgt, wobei Frequenzen, Frequenzabfolgen und/oder Frequenzkombinationen ermittelt werden, die mit einem subjektiven Bewertungsergebnis, das einem vorgegebenen Bewertungsergebnis entspricht, vorzugsweise einem positiven Bewertungsergebnis, korrelieren.

14. Verfahren nach einem der Ansprüche 11-14, wobei das Ermitteln eines Zusammenhangs der psychoakustischen Kennwerte der Audiosignale mit dem subjektiven Bewertungsergebnis durch eine Spektrogrammanalyse erfolgt, wobei ein dominanter Frequenzbereich eines Signals, ein charakteristisches Frequenzmuster, eine zeitliche Veränderung im Audiosignal, wiederkehrende Muster, Störgeräusche außerhalb eines gewünschten Frequenzbereichs, Muster zur automatisierten Analyse und/oder dominante Frequenzen ermittelt werden, die mit einem subjektiven Bewertungsergebnis, das einem vorgegebenen Bewertungsergebnis entspricht, vorzugsweise einem positiven Bewertungsergebnis, korrelieren.

15. Verfahren nach einem der vorangehenden Ansprüche, aufweisend, nach dem Eingeben (S4) des subjektiven Bewertungsergebnisses durch die Testperson auf dem Endgerät oder nach dem Ermitteln (S5) des Zusammenhangs der Parameterwerte, oder von Sätzen der Parameterwerten, mit dem subjektiven Bewertungsergebnis:
- Ändern der Parameterwerte der Maschine, des Flugzeugs oder Fahrzeugs,
- Wiedergabe von geänderten Audiosignalen auf dem Endgerät, welche das Geräusch der Maschine, des Flugzeugs oder Fahrzeugs auf Basis der geänderten Parameterwerte wiedergeben,
- Bewerten eines Höreindrucks der geänderten Audiosignale durch die Testperson und Erhalten eines weiteren subjektiven Bewertungsergebnisses der Testperson,
- Eingeben des weiteren subjektiven Bewertungsergebnisses durch die Testperson auf dem Endgerät,
wobei bei dem Ermitteln des Zusammenhangs der Parameterwerte, oder von Sätzen der Parameterwerten, mit dem subjektiven Bewertungsergebnis das weitere subjektive Bewertungsergebnis mit einbezogen wird.
